# EUROPÄISCHE PATENTSCHRIFT

(11) **EP 3 484 744 B1**
(45) Veröffentlichungstag und Bekanntmachung des Hinweises auf die Patenterteilung: **06.03.2024**
(21) Anmeldenummer: 17740669.1
(22) Anmeldetag: 06.07.2017
(51) Int. Cl.: B60N 2/07

(54) **LÄNGSEINSTELLER SOWIE FAHRZEUGSITZ**
LONGITUDINAL ADJUSTER AND VEHICLE SEAT
DISPOSITIF DE RÉGLAGE LONGITUDINAL ET SIÈGE DE VÉHICULE

(30) Priorität: 14.07.2016 DE 102016212906; 19.09.2016 DE 102016217843
(43) Veröffentlichungstag der Anmeldung: 22.05.2019
(73) Patentinhaber: KEIPER Seating Mechanisms Co., Ltd., Shanghai 201315 (CN)
(72) Erfinder: EMRICH, Holger, 66887 Erdesbach (DE); KOENIG, Michael, 67688 Rodenbach (DE); REISCHMANN, Martin, 66989 Hoehfroeschen (DE); VELTEN, Ralf, 67716 Heltersberg (DE)
(74) Vertreter: Kutzenberger Wolff & Partner
(86) Internationale Anmeldenummer: PCT/EP2017/066923
(87) Internationale Veröffentlichungsnummer: WO 2018/011052

(56) Entgegenhaltungen:
- EP-A1- 2 223 822
- DE-B4- 10 210 555
- US-A1- 2005 230 591

## Beschreibung

Die Erfindung betrifft einen Längseinsteller mit den Merkmalen des Anspruchs 1 sowie einen Fahrzeugsitz.

### Stand der Technik

Aus der DE 102 10 555 B4 sind ein gattungsgemäßer Längseinsteller sowie ein gattungsgemäßer Fahrzeugsitz bekannt. Der Längseinsteller umfasst zwei relativ zueinander verschiebbare Sitzschienen, nämlich eine Oberschiene und eine Unterschiene, welche einander wechselseitig umgreifen. Die Sitzschienen umfassen jeweils Anschlagmittel, wobei die Anschlagmittel im Crashfall eine zusätzliche Verbindung zwischen der Oberschiene und der Unterschiene schaffen. In einem Crashfall auftretende Kräfte werden dann zusätzlich über die besagten Anschlagmittel von der Oberschiene und der Unterschiene in die Fahrzeugstruktur eingeleitet.

Ein ebensolcher Längseinsteller sowie ein ebensolcher Fahrzeugsitz sind aus der US 2005/0230591 A1 bekannt.

Aus der FR 2 888 791 A1 ist ein Gleitführungssystem bekannt, welches einen Abstandshalter mit verstärkenden Profilen und Gleitschienen bzw. Gleitführungen für Automobilsitze verwendet. Die Gleitführungen und Profile sind nicht optimal hinsichtlich einer Aufnahme bzw. Absorption von Energie während eines Stoßes bzw. einer mechanischen Belastung und hinsichtlich gewisser Geräusche, die beim Auftreten von bestimmten Vibrationsbeanspruchungen auftreten können.

Aus der US 5 653 506 A ist eine verstellbare Verriegelung bekannt, die die Wahrscheinlichkeit, dass der Beschlag bei einer Kollision von dem Rest der Sitzanordnung abbricht, verringert. Die Sitzanordnung umfasst eine Basis mit einem Sockel und einem Schienenmechanismus, einen Sitzrahmen mit einer Sitzschale und einer Sitzlehne, die durch die Verstellvorrichtung miteinander verbunden sind, und eine verstellbare Verriegelung zum mechanischen Befestigen der Verstellvorrichtung an der Sitzbasis. Die Verriegelung umfasst einen J-förmigen Halter, der an der Liege befestigt ist, und eine umgekehrte J-förmige Schiene, die an dem Sockel befestigt ist.

Aus der DE 20 2004 003 359 U1 ist eine Zusatzverriegelung für einen längseinstellbaren Fahrzeugsitz bekannt, bei dem eine erste Sitzschiene und eine zweite Sitzschiene relativ zueinander in Sitzlängsrichtung verschiebbar und verriegelbar sind, wobei die Zusatzverriegelung im Normalfall unwirksam ist und erst im Crashfall die zweite Sitzschiene zusätzlich mit der ersten Sitzschiene verriegelt. Die Zusatzverriegelung weist einen mit einem Teil eines Sicherheitsgurtsystems verbundenen Gurtadapter, der mit der zweiten Sitzschiene kraftschlüssig in Verbindung steht, und eine mit der ersten Sitzschiene in Verbindung stehende Zahnklammer auf, wobei im Crashfall der Teil des Sicherheitsgurtsystems nach Überschreiten einer Grenzkraft den Gurtadapter in definierter Weise relativ zur Zahnklammer bewegt und dadurch die Zusatzverriegelung verriegelt.

Aus der EP 2 223 822 A1 ist eine fahrzeugseitige Gleitvorrichtung bekannt, welche eine untere Schiene mit einem Basisabschnitt aufweist, der sich gegenüberliegend zu einem Fahrzeugboden erstreckt. Ferner weist die untere Schiene zwei erste Innenabschnitte, die sich in engem Kontakt von einem Mittelteil des Basisabschnitts nach oben erstrecken, und untere Hakenabschnitte auf, die sich nach außen erstrecken, wobei die oberen Enden der beiden ersten Innenabschnitte jeweils eine umgekehrte U-Buchstabenform aufweisen. Die Gleitvorrichtung ferner aufweisend eine obere Schiene mit einem horizontalen Wandabschnitt, parallel zu dem Basisabschnitt, und vertikale Wandabschnitte, die sich von beiden Enden des horizontalen Wandabschnitts nach unten erstrecken. Ferner ist die obere Schiene mit einem Hakenelement versehen, das Verbindungsabschnitte aufweist, die mit beiden vertikalen Wandabschnitten verbunden sind und sich nach unten erstrecken, und obere Hakenelement, die sich von den unteren Enden der Verbindungsabschnitte nach innen erstrecken, um jeweils eine U-Buchstabenform anzunehmen. Wenn eine Trennlast gegen die untere Schiene auf die obere Schiene ausgeübt wird, werden die unteren Hakenabschnitte und die oberen Hakenabschnitte in Eingriff gebracht.

### Aufgabe

Der Erfindung liegt die Aufgabe zu Grunde, einen Längseinsteller der eingangs genannten Art zu verbessern, insbesondere die Festigkeit des Längseinstellers im Crashfall zu erhöhen, sowie einen entsprechenden Fahrzeugsitz bereitzustellen.

### Lösung

Diese Aufgabe wird erfindungsgemäß gelöst durch einen Längseinsteller gemäss Anspruch 1.

Dadurch, dass das Verstärkungsprofil einen Verbindungsabschnitt aufweist, welcher nach hinten aus dem Innenkanal herausgeführt ist und mit einem hinteren Ende, insbesondere mit einer nach hinten gerichteten Oberfläche, eines Sitzrahmenseitenteils verbindbar ist, lässt sich eine vertikale Krafteinwirkung durch eine Belastung des Sitzrahmenseitenteils im Crashfall besonders gut auf das Verstärkungsprofil weiterleiten, wodurch nach einem Verhaken des Verstärkungsprofils und des Ankers eine Überbeanspruchung des Schienenpaares verhindert ist. Folglich lässt sich die Festigkeit des Längseinstellers im Crashfall erhöhen. Unter der "nach hinten gerichteten Oberfläche" wird insbesondere eine Oberfläche des Sitzrahmenseitenteils bezeichnet, welche eine im Wesentlichen parallel zur Längsrichtung verlaufende Normale aufweist. Unter dem "Sitzrahmenseitenteil" wird allgemein auch ein Bauteil eines lasttragenden Strukturbauteils eines Sitzteils, ein Querprofil, ein Verstärkungselement des Sitzrahmens, oder dergleichen verstanden.

Vorteilhafte Ausgestaltungen, welche einzeln oder in Kombination miteinander eingesetzt werden können, sind Gegenstand der Unteransprüche.

Der Verbindungsabschnitt kann ferner einteilig mit dem Verstärkungsprofil ausgestaltet sein. Der Verbindungsabschnitt ist erfindungsgemäss um eine in Querrichtung verlaufende Biegeachse nach oben umgebogen.

Der Verbindungsabschnitt kann um ca. 90° um eine in Querrichtung verlaufende Biegeachse nach oben umgebogen sein. Der Verbindungsabschnitt kann annähernd senkrecht von einem Grundkörper, insbesondere einem hinteren Ende des Grundkörpers, des Verstärkungsprofils abstehen. Der Anker kann mit einem fahrzeugspezifischen Anbindungsadapter, bzw. Schienen-Boden-Adapter zur Anpassung an ein strukturseitiges Verbindungsprofil verbunden sein.

Das Verstärkungsprofil kann bevorzugt aus Metall, insbesondere aus einem Metallblech, gefertigt sein. Der Anker kann im Wesentlichen aus einem Metall gefertigt sein. Das Verstärkungsprofil kann beispielsweise bei einem auf einem Sitzschienenpaar vormontierten Fahrzeugsitz vom hinteren Ende des Schienenpaares in den Innenkanal zwischen der ersten Sitzschiene und der zweiten Sitzschiene einschiebbar sein. Das Verstärkungsprofil kann mittels eines Fixierelements in einer nach hinten gerichteten Oberfläche des Sitzrahmenseitenteils gehalten sein. Das Fixierelement kann beispielsweise ein Niet oder eine Schraubverbindung sein.

Ferner kann es vorgesehen sein, dass der Verbindungsabschnitt eine Ausnehmung und das Sitzrahmenseitenteil einen Vorsprung aufweist, wobei in montiertem Zustand der Vorsprung des Sitzrahmenseitenteils in die Ausnehmung des Verbindungsabschnitts des Verstärkungsprofils eingreift.

In dem Verbindungsabschnitt und der nach hinten gerichteten Oberfläche kann zur Verbindung mittels des Fixierelements jeweils eine Durchgangsbohrung vorgesehen sein. Der Verbindungsabschnitt kann oberhalb und unterhalb einer Durchgangsbohrung jeweils eine Ausnehmung aufweisen. Das Sitzrahmenseitenteil kann oberhalb und unterhalb der Durchgangsbohrung einen Vorsprung aufweisen. In montiertem Zustand können die Vorsprünge des Sitzrahmenseitenteils in die Ausnehmungen des Verbindungsabschnitts des Verstärkungsprofils eingreifen.

Alternativ kann der Verbindungsabschnitt oberhalb und unterhalb der Durchgangsbohrung jeweils einen Vorsprung und das Sitzrahmenseitenteil oberhalb und unterhalb der Durchgangsbohrung eine Ausnehmung aufweisen, wobei die Vorsprünge des Verbindungsabschnitts des Verstärkungsprofils in montiertem Zustand in die Ausnehmungen des Sitzrahmenseitenteils eingreifen.

Ein Durchmesser der Durchgangsbohrung im Verbindungsabschnitt kann geringfügig größer sein, als ein Durchmesser der Durchgangsbohrung im Sitzrahmenseitenteil. Zwischen dem Fixierelement und dem Verbindungsabschnitt kann ein Spalt gebildet sein. Das Fixierelement kann das Verstärkungsprofil an dem Sitzrahmenseitenteil lediglich in Längsrichtung halten. Senkrecht zur Längsrichtung kann das montierte Verstärkungsprofil ein geringfügiges Spiel aufweisen.

Die Vorsprünge des Sitzrahmenseitenteils können aus der nach hinten gerichteten Oberfläche nach hinten, beispielsweise mittels Freischneidens und Umbiegens, ausgestellt sein. Die Vorsprünge können aus der nach hinten gerichteten Oberfläche ausgeprägt oder mit der nach hinten gerichteten Oberfläche verbunden sein, insbesondere an die nach hinten gerichtete Oberfläche angeschweißt sein.

Die Vorsprünge können im Bereich einer oberen Kante mit einem oberen Randabschnitt der Ausnehmungen in Eingriff bringbar sein. Eine Kraft in Vertikalrichtung kann über den Verbindungsabschnitt in das Verstärkungsprofil einleitbar und nach einem Verkrallen des Verstärkungsprofils und des Ankers miteinander, unmittelbar weiter über einen Schienen-Boden-Adapter in die Fahrzeugstruktur einleitbar sein.

Eine Anbindung des Verbindungsabschnitts an den restlichen Körper des Verstärkungsprofils kann im Wesentlichen über die gesamte Breite des Verstärkungsprofils, insbesondere die gesamte Erstreckung in Querrichtung, erfolgen, wodurch eine Belastbarkeit der Verbindung zwischen dem Sitzrahmenseitenteil und dem Verstärkungsprofil erhöht ist.

Die Aufgabe wird ferner gelöst durch einen Fahrzeugsitz mit einem Längseinsteller gemäß vorstehender Beschreibung, wobei der Fahrzeugsitz ein Sitzrahmenseitenteil aufweist, welches mit der ersten Sitzschiene verbunden ist. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines erfindungsgemäßen Fahrzeugsitzes mit einem erfindungsgemäßen Längseinsteller,
- Fig. 2:: eine ausschnittsweise vergrößerte Ansicht auf ein hinteres Ende des Längseinstellers,
- Fig. 3:: eine Ansicht auf das hintere Ende des Längseinstellers von Fig. 2 ohne ein Fixierelement,
- Fig. 4:: eine Ansicht auf das hintere Ende des Längseinstellers von Fig. 2 ohne ein Sitzrahmenseitenteil,
- Fig. 5:: eine Darstellung eines Querschnitts des Längseinstellers von Fig. 4,
- Fig. 6:: eine ausschnittsweise Schnittdarstellung senkrecht zu einer Querrichtung durch den Längseinsteller von Fig. 2,
- Fig. 7:: eine perspektivische Ansicht eines Verstärkungsprofils des Längseinstellers,
- Fig. 8:: eine perspektivische Ansicht einer zweiten Sitzschiene mit einem montiertem Anker, und
- Fig. 9:: eine Darstellung eines Längsschnitts durch den Längseinsteller von Fig. 4.

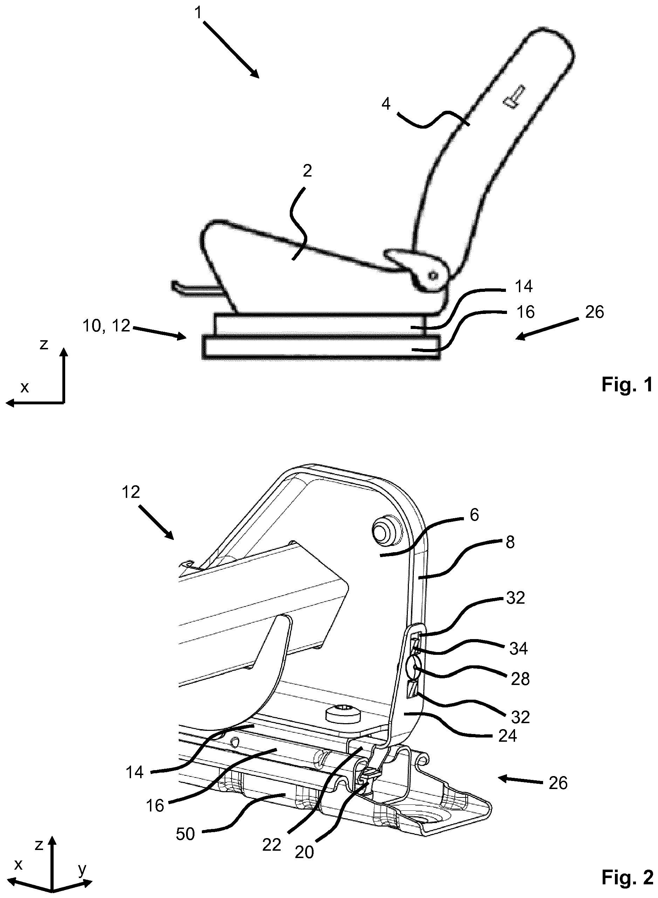

Ein in Figur 1 schematisch dargestellte Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert. Der Längseinsteller 10 weist ein Schienenpaar 12 auf. Das Schienenpaar 12 ist aus einer ersten Sitzschiene 14, insbesondere zur Verbindung mit einem Sitzrahmenseitenteil 6, und einer zweiten Sitzschiene 16, insbesondere zur Verbindung mit einer Fahrzeugstruktur, gebildet. Die Sitzschienen 14, 16 des Schienenpaares 12 sind in Längsrichtung x relativ zueinander verschiebbar.

Fig. 2 zeigt eine ausschnittsweise vergrößerte Ansicht auf ein hinteres Ende 26 des Längseinstellers 10. Die Sitzschienen 14, 16 des Schienenpaares 12 umgreifen einander wechselseitig unter Bildung eines Innenkanals 18, wobei die erste Sitzschiene 14 zur Verbindung mit einem Sitzrahmenseitenteil 6 und die zweite Sitzschiene 16 zur Verbindung mit einer nicht dargestellten Fahrzeugstruktur dienen. In dem Innenkanal 18 ist ein an der zweiten Sitzschiene 16 fixierter Anker 20 angeordnet. In dem Innenkanal 18 ist ferner ein an der ersten Sitzschiene 14 fixiertes Verstärkungsprofil 22 angeordnet. Das Verstärkungsprofil 22 und der Anker 20 sind im Normalfall voneinander beabstandet und verhaken in Reaktion auf eine vorgegebene Krafteinwirkung, beispielsweise im Crashfall, miteinander, insbesondere greifen ineinander ein. Das Verstärkungsprofil 22 weist einen Verbindungsabschnitt 24 auf, welcher mit einem hinteren Ende 26, insbesondere mit einer nach hinten gerichteten Oberfläche 8, des Sitzrahmenseitenteils 6 verbunden ist. Der Verbindungsabschnitt 24 ist vorliegend einteilig mit dem Verstärkungsprofil 22 ausgestaltet. Der Verbindungsabschnitt 24 ist vorliegend um ca. 90° nach oben umgebogen und steht annähernd senkrecht von einem restlichen Grundkörper des Verstärkungsprofils 22 ab. Der Anker 20 kann beispielsweise mit der zweiten Sitzschiene 16 und einem fahrzeugspezifischen Sitzschienenadapter 50 zur Anpassung an ein strukturseitiges Verbindungsmaß befestigt sein.

Das Verstärkungsprofil 22 und der Anker 20 sind bevorzugt aus Metall, insbesondere aus einem Metallblech, gefertigt. Das Verstärkungsprofil 22 kann beispielsweise bei einem auf einem Schienenpaar 12 vormontierten Fahrzeugsitz 1 von hinten in das hintere Ende 26 des Innenkanals 18 zwischen der ersten Sitzschiene 14 und der zweiten Sitzschiene 16 eingeschoben werden. Das Verstärkungsprofil 22 ist mittels eines Fixierelements 28 in der nach hinten gerichteten Oberfläche 8 des Sitzrahmenseitenteils 6 gehalten. Das Fixierelement 28 kann beispielsweise ein Niet sein. Das Fixierelement 28 kann ebenso mittels einer Schraubverbindung bereitgestellt sein. Zusätzlich kann eine weitere Schraubverbindung an dem Sitzrahmenseitenteil 6 in Vertikalrichtung z durch die erste Sitzschiene 14 und das Verstärkungsprofil 22 hindurchragend angeordnet sein.

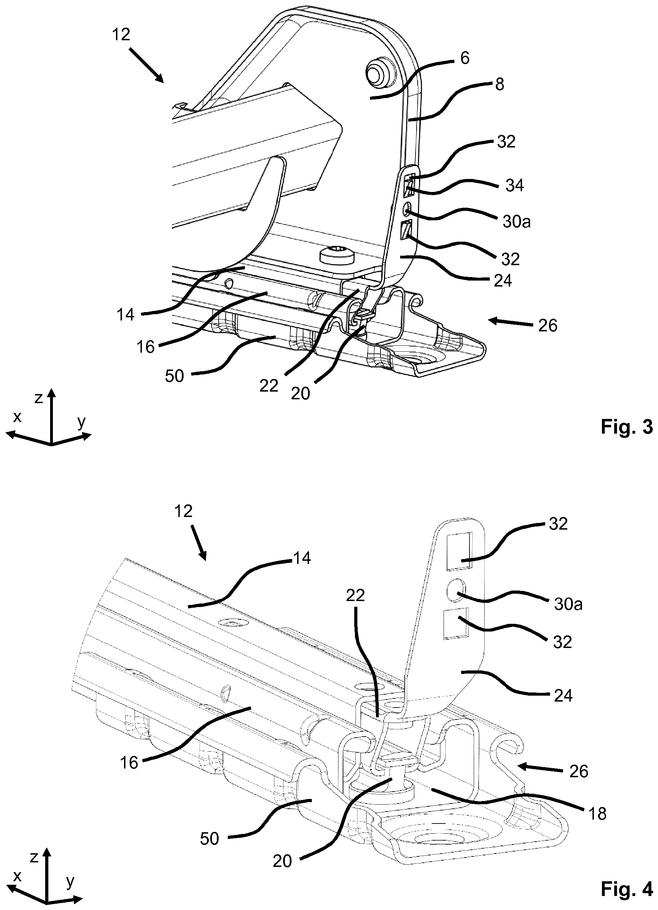

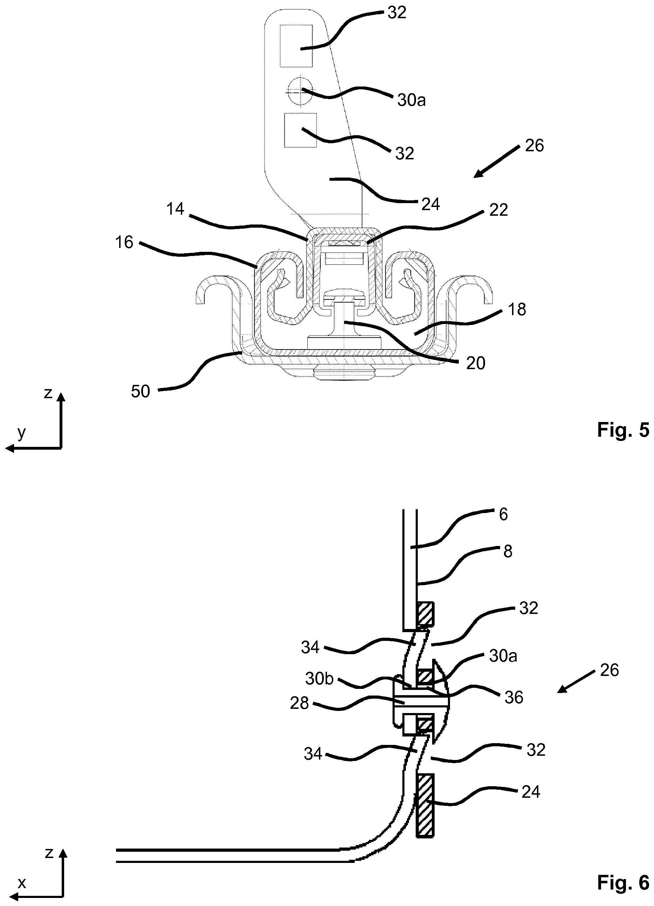

In Fig. 3 ist der Längseinsteller 10 gemäß Fig. 2 ohne das Fixierelement 28 und in Fig. 4 ohne das Sitzrahmenseitenteil 6 dargestellt. Fig. 5 zeigt eine Darstellung eines Querschnitts des Längseinstellers 10 von Fig. 4. Hierbei ist gezeigt, dass in dem Verbindungsabschnitt 24 und der nach hinten gerichteten Oberfläche 8 zur Verbindung mit dem Fixierelement 28 jeweils eine einander fluchtend ausgerichtete Durchgangsbohrung 30a, 30b vorgesehen ist. Der Verbindungsabschnitt 24 weist oberhalb und unterhalb der Durchgangsbohrung 30a jeweils eine Ausnehmung 32 auf.

Fig. 6 zeigt eine ausschnittsweise Schnittdarstellung senkrecht zu einer Querrichtung y durch den Längseinsteller 10 von Fig. 4. Das Sitzrahmenseitenteil 6 weist oberhalb und unterhalb der Durchgangsbohrung 30b einen Vorsprung 34 auf. In montiertem Zustand greifen die Vorsprünge 34 des Sitzrahmenseitenteils 6 in die Ausnehmungen 32 des Verbindungsabschnitts 24 des Verstärkungsprofils 22 ein. Ferner ist erkennbar, dass der Durchmesser der Durchgangsbohrung 30a im Verbindungsabschnitt 24 geringfügig größer ist, als der Durchmesser der Durchgangsbohrung 30b im Sitzrahmenseitenteil 6. Dies führt zu einem Spalt 36 zwischen dem Fixierelement 28 und dem Verbindungsabschnitt 24. Das Fixierelement 28 hält das Verstärkungsprofil 22 an dem Sitzrahmenseitenteil 6 lediglich in Längsrichtung x. Senkrecht zur Längsrichtung x hat das montierte Verstärkungsprofil 22 ein geringfügiges Spiel.

Weiter sind die Vorsprünge 34 des Sitzrahmenseitenteils 6 vorliegend aus der nach hinten gerichteten Oberfläche 8 nach hinten ausgestellt, beispielsweise mittels Freischneidens und Umbiegens. Ebenfalls können die Vorsprünge 34 auch ausgeprägt oder an die nach hinten gerichtete Oberfläche 8 angeschweißt sein.

Im Falle einer übermäßigen Krafteinwirkung von hinten auf die Lehne 4 des Fahrzeugsitzes 1, wie dies beispielsweise durch ein ungesichertes, auf die Lehne 4 aufprallendes Transportgut im Crashfall hervorgerufen werden kann, wird ein Anheben des hinteren Endes 26 des Fahrzeugsitzes 1 und des Sitzrahmenseitenteils 6 in Vertikalrichtung z nach oben bewirkt. Bei dieser Fehlbelastung des Fahrzeugsitzes 1 gelangen jeweils eine obere Kante der Vorsprünge 34 mit einem oberen Randabschnitt der Ausnehmungen 32 in Eingriff. Hierbei ist es vorgesehen, dass Kräfte in Vertikalrichtung z über den Verbindungsabschnitt 24 in das Verstärkungsprofil 22 eingeleitet und nach einem Verkrallen des Verstärkungsprofils 22 und des Ankers 20 miteinander, unmittelbar weiter über den Anker 20 in die Fahrzeugstruktur eingeleitet werden können. Eine Fehlbelastung, insbesondere eine zu hohe Belastung, der ersten und zweiten Sitzschienen 14, 16 in Vertikalrichtung z wird vermieden, wodurch ferner eine überlastbedingte Verformung der Sitzschienen 14, 16 bis hin zu einem sogenannten Ausschälen verhindert ist.

Die Anbindung des Verbindungsabschnitts 24 an den restlichen Körper des Verstärkungsprofils 22 erfolgt bevorzugt über im Wesentlichen die gesamte Breite des Verstärkungsprofils 22, insbesondere die gesamte Erstreckung in Querrichtung y, wodurch eine Belastbarkeit der Verbindung zwischen dem Sitzrahmenseitenteil 6 und dem Verstärkungsprofil 22 erhöht ist. Ferner ist die abzuleitende Kraft relativ zu einer Querrichtung y symmetrisch in einen in Längsrichtung y betrachtet linken und rechten Teil des Verstärkungsprofils 22 einleitbar.

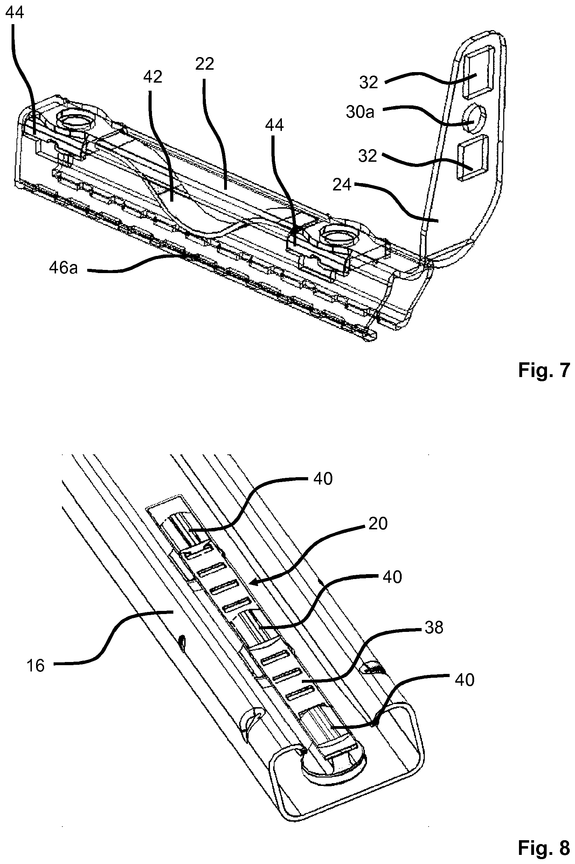

Fig. 7 zeigt eine perspektivische Ansicht des Verstärkungsprofils 22 des Längseinstellers 10 in einer teildurchsichtigen Darstellung. Der Grundkörper des Verstärkungsprofils 22 weist ein im Wesentlichen C-förmiges Querschnittsprofil auf. Im Inneren des Grundkörpers des Verstärkungsprofils 22 sind zwei Halteelemente 44 angeordnet, welche zur Fixierung des Verstärkungsprofils 22 mit der Oberschiene dienen. Zwischen den beiden Halteelementen 44 ist ein Federelement 42 gehalten und/oder verspannt. Das Federelement 42 kann bevorzugt als eine Blattfeder ausgestaltet sein. Das Verstärkungsprofil 22 weist in einem unteren Bereich, insbesondere im Bereich der beiden Endkanten des C-förmigen Querschnittsprofils, eine Verzahnung 46a auf.

Fig. 8 zeigt eine perspektivische Ansicht einer zweiten Sitzschiene 16 mit einem montierten Anker 20. Der Anker 20 weist eine Ankerplatte 38 auf, welche mittels dreier Ankerbolzen 40 in der zweiten Sitzschiene 16 gehalten ist.

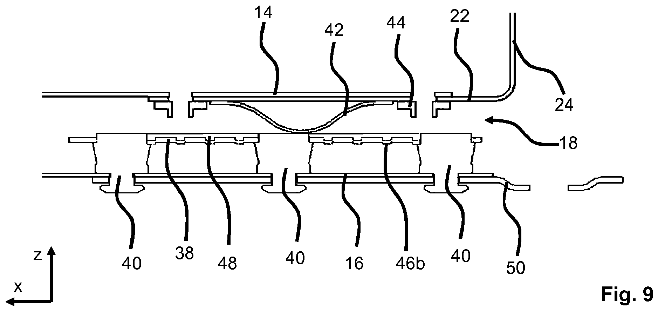

Fig. 9 zeigt eine Darstellung eines Längsschnitts senkrecht zur Querrichtung y durch den Längseinsteller 10 von Fig. 4. Die Ankerbolzen 40 halten die Ankerplatte 38 in Vertikalrichtung z in einem definierten Abstand zu einem Bodenabschnitt der zweiten Sitzschiene 16. Mit den jeweils der Ankerplatte 38 gegenüberliegenden Enden der Ankerbolzen 40, ist der Anker 20 in der zweiten Sitzschiene 16 und dem Sitzschienenadapter 50 gehalten. Darüber hinaus weist die Ankerplatte 38 eine nach unten gerichtete Gegenverzahnung 46b auf, welche mit der Verzahnung 46a des Verstärkungsprofils 22 in Eingriff bringbar ist, wenn das Verstärkungsprofil 22 aufgrund einer entsprechenden Fehlbelastung des Fahrzeugsitzes 1 nach oben gezogen wird. Der Eingriff der Verzahnung 46a und der Gegenverzahnung 46b sichern den Fahrzeugsitz 1 nunmehr zusätzlich in der Längsrichtung x gegen ein bei der Fehlbelastung des Fahrzeugsitzes 1 unerwünschtes Längsverschieben.

Auf der Ankerplatte 38 ist ferner bevorzugt ein Puffer 48 angeordnet, welcher zur Bereitstellung und/oder Anpassung einer einheitlichen gleichmäßigen Oberfläche der Ankerplatte 38 und der Ankerbolzen 40 dient. An dieser Oberfläche stützt sich das Federelement 42 des Verstärkungsprofils 22 ab, wodurch ein unerwünschtes Klappergeräusch vermeidbar ist. Eine Federkraft des Federelements 42 ist derart bemessen, dass ein freies Spiel des Schienenpaares 12 zur Vermeidung von Klappergeräuschen reduziert ist, ohne hierdurch ein Eingreifen der Verzahnung 46a des Verstärkungsprofils 22 und der Gegenverzahnung 46b der Ankerplatte 38 zu bewirken.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Sitzrahmenseitenteil
- 8: Oberfläche
- 10: Längseinsteller
- 12: Schienenpaar
- 14: erste Sitzschiene
- 16: zweite Sitzschiene
- 18: Innenkanal
- 20: Anker
- 22: Verstärkungsprofil
- 24: Verbindungsabschnitt
- 26: hinteres Ende
- 28: Fixierelement
- 30a: Durchgangsbohrung
- 30b: Durchgangsbohrung
- 32: Ausnehmung
- 34: Vorsprung
- 36: Spalt
- 38: Ankerplatte
- 40: Ankerbolzen
- 42: Federelement
- 44: Halteelement
- 46a: Verzahnung
- 46b: Gegenverzahnung
- 48: Puffer
- 50: Sitzschienenadapter
- x: Längsrichtung
- y: Querrichtung
- z: Vertikalrichtung

## Patentansprüche

1. Längseinsteller (10) für einen Fahrzeugsitz (1), insbesondere Kraftfahrzeugsitz, aufweisend mindestens ein Schienenpaar (12), welches aus einer ersten Sitzschiene (14), insbesondere zur Verbindung mit einem Sitzrahmenseitenteil (6), und einer zweiten Sitzschiene (16), insbesondere zur Verbindung mit einer Fahrzeugstruktur, gebildet ist, wobei die Sitzschienen (14, 16) des Schienenpaares (12) in Längsrichtung (x) relativ zueinander verschiebbar sind und unter Bildung eines Innenkanals (18) einander wechselseitig umgreifen, wobei in dem Innenkanal (18) ein an der zweiten Sitzschiene (16) fixierter Anker (20) angeordnet ist, wobei in dem Innenkanal (18) ein an der ersten Sitzschiene (14) fixiertes Verstärkungsprofil (22) angeordnet ist, wobei das Verstärkungsprofil (22) und der Anker (20) im Normalfall voneinander beabstandet sind und in Reaktion auf eine vorgegebene Krafteinwirkung, beispielsweise im Crashfall, miteinander verhaken, insbesondere ineinander eingreifen,
**dadurch gekennzeichnet, dass**
das Verstärkungsprofil (22) einen Verbindungsabschnitt (24) aufweist, welcher nach hinten aus dem Innenkanal (18) herausgeführt ist und mit einem hinteren Ende eines Sitzrahmenseitenteils (6) verbindbar ist, wobei der Verbindungsabschnitt (24) um eine in Querrichtung (y) verlaufende Biegeachse nach oben umgebogen ist.

2. Längseinsteller (10) gemäß Anspruch 1, wobei der Verbindungsabschnitt (24) mit einer nach hinten gerichteten Oberfläche (8) eines Sitzrahmenseitenteils (6) verbindbar ist.

3. Längseinsteller (10) gemäß einem der Ansprüche 1 oder 2, wobei der Verbindungsabschnitt (24) einteilig mit dem Verstärkungsprofil (22) ausgestaltet ist.

4. Längseinsteller (10) gemäß einem der Ansprüche 1 bis 3, wobei der Verbindungsabschnitt (24) um ca. 90° um die in Querrichtung (y) verlaufende Biegeachse nach oben umgebogen ist.

5. Längseinsteller (10) gemäß einem der Ansprüche 1 bis 4, wobei der Verbindungsabschnitt (24) annähernd senkrecht von einem Grundkörper des Verstärkungsprofils (22) absteht.

6. Längseinsteller (10) gemäß Anspruch 5, wobei der Verbindungsabschnitt (24) annähernd senkrecht von einem hinteren Ende des Grundkörpers des Verstärkungsprofils (22) absteht.

7. Längseinsteller (10) gemäß einem der Ansprüche 1 bis 6, wobei der Anker (20) mit einem fahrzeugspezifischen Sitzschienenadapter (50), bzw. Schienen-Boden-Adapter zur Anpassung an ein strukturseitiges Verbindungsprofil verbunden ist.

8. Längseinsteller (10) gemäß einem der Ansprüche 1 bis 7, wobei das Verstärkungsprofil (22) bei einem auf einem Schienenpaar (12) vormontierten Fahrzeugsitz (1) vom hinteren Ende des Schienenpaares (12) in den Innenkanal (18) zwischen der ersten Sitzschiene (14) und der zweiten Sitzschiene (16) einschiebbar ist.

9. Längseinsteller (10) gemäß einem der Ansprüche 1 bis 8, wobei das Verstärkungsprofil (22) mittels eines Fixierelements (28) an einer nach hinten gerichteten Oberfläche (8) des Sitzrahmenseitenteils (6) gehalten ist.

10. Längseinsteller (10) gemäß Anspruch 9, wobei das Fixierelement (28) ein Niet oder eine Schraubverbindung ist.

11. Längseinsteller (10) gemäß einem der Ansprüche 1 bis 10, wobei der Verbindungsabschnitt (24) eine Ausnehmung (32) und das Sitzrahmenseitenteil (6) einen Vorsprung (34) aufweist, wobei in montiertem Zustand der Vorsprung (34) des Sitzrahmenseitenteils (6) in die Ausnehmung (32) des Verbindungsabschnitts (24) des Verstärkungsprofils (22) eingreift.

12. Längseinsteller (10) gemäß einem der Ansprüche 1 bis 10, wobei der Verbindungsabschnitt (24) einen Vorsprung (34) und das Sitzrahmenseitenteil (6) eine Ausnehmung (32) aufweist, wobei in montiertem Zustand der Vorsprung (34) des Verbindungsabschnitts (24) des Verstärkungsprofils (22) in die Ausnehmung (32) des Sitzrahmenseitenteils (6) eingreift.

13. Längseinsteller (10) gemäß einem der Ansprüche 1 bis 12, wobei in dem Verbindungsabschnitt (24) und der nach hinten gerichteten Oberfläche (8) zur Verbindung mittels des Fixierelements (28) jeweils eine Durchgangsbohrung (30a, 30b) vorgesehen ist.

14. Längseinsteller (10) gemäß Anspruch 13, wobei ein Durchmesser der Durchgangsbohrung (30a) im Verbindungsabschnitt (24) geringfügig größer ist, als ein Durchmesser der Durchgangsbohrung (30b) im Sitzrahmenseitenteil (6).

15. Fahrzeugsitz (1) mit einem Längseinsteller (10) nach einem der vorhergehenden Ansprüche, wobei der Fahrzeugsitz (1) ein Sitzrahmenseitenteil (6) aufweist, welches mit einer ersten Sitzschiene (14) verbunden ist.

## Claims

1. Longitudinal adjuster (10) for a vehicle seat (1), in particular a motor vehicle seat, having at least one pair of rails (12), which is formed of a first seat rail (14), in particular for connecting to a seat frame side part (6), and a second seat rail (16), in particular for connecting to a vehicle structure, wherein the seat rails (14, 16) of the pair of rails (12) can be displaced in the longitudinal direction (x) relative to one another and engage reciprocally around one another, forming an internal channel (18), wherein an anchor (20) that is fastened to the second seat rail (16) is arranged in the internal channel (18), wherein a reinforcing profile (22) that is fastened to the first seat rail (14) is arranged in the internal channel (18), wherein, in normal conditions, the reinforcing profile (22) and the anchor (20) are spaced apart from one another and, in response to a predefined application of force, for example in the event of a crash, are jammed together, in particular engage into one another,
**characterized in that**
the reinforcing profile (22) has a connecting portion (24), which passes rearwardly out of the internal channel (18) and can be connected to a rear end of a seat frame side part (6), wherein the connecting portion (24) is bent upwardly about a bending axis extending in the transverse direction (y).

2. Longitudinal adjuster (10) according to Claim 1, wherein the connecting portion (24) can be connected to a rearwardly directed surface (8) of a seat frame side part (6).

3. Longitudinal adjuster (10) according to either of Claims 1 and 2, wherein the connecting portion (24) is configured in one piece with the reinforcing profile (22) .

4. Longitudinal adjuster (10) according to one of Claims 1 to 3, wherein the connecting portion (24) is bent upwardly through approximately 90° about the bending axis extending in the transverse direction (y).

5. Longitudinal adjuster (10) according to one of Claims 1 to 4, wherein the connecting portion (24) protrudes approximately perpendicularly from a main body of the reinforcing profile (22).

6. Longitudinal adjuster (10) according to Claim 5, wherein the connecting portion (24) protrudes approximately perpendicularly from a rear end of the main body of the reinforcing profile (22).

7. Longitudinal adjuster (10) according to one of Claims 1 to 6, wherein the anchor (20) is connected to a vehicle-specific seat rail adapter (50) or rail-floor adapter for adapting to a connecting profile on a structure.

8. Longitudinal adjuster (10) according to one of Claims 1 to 7, wherein, in the case of a vehicle seat (1) preinstalled on a pair of rails (12), the reinforcing profile (22) can be inserted from the rear end of the pair of rails (12) into the internal channel (18) between the first seat rail (14) and the second seat rail (16).

9. Longitudinal adjuster (10) according to one of Claims 1 to 8, wherein the reinforcing profile (22) is held on a rearwardly directed surface (8) of the seat frame side part (6) by means of a fastening element (28).

10. Longitudinal adjuster (10) according to Claim 9, wherein the fastening element (28) is a rivet or a screw connection.

11. Longitudinal adjuster (10) according to one of Claims 1 to 10, wherein the connecting portion (24) has a cutout (32) and the seat frame side part (6) has a protrusion (34), wherein, in the mounted state, the protrusion (34) of the seat frame side part (6) engages in the cutout (32) of the connecting portion (24) of the reinforcing profile (22).

12. Longitudinal adjuster (10) according to one of Claims 1 to 10, wherein the connecting portion (24) has a protrusion (34) and the seat frame side part (6) has a cutout (32), wherein, in the mounted state, the protrusion (34) of the connecting portion (24) of the reinforcing profile (22) engages in the cutout (32) of the seat frame side part (6).

13. Longitudinal adjuster (10) according to one of Claims 1 to 12, wherein a through-bore (30a, 30b) is provided in each case in the connecting portion (24) and in the rearwardly directed surface (8) for connecting by means of the fastening element (28).

14. Longitudinal adjuster (10) according to Claim 13, wherein a diameter of the through-bore (30a) in the connecting portion (24) is slightly larger than a diameter of the through-bore (30b) in the seat frame side part (6).

15. Vehicle seat (1) with a longitudinal adjuster (10) according to one of the preceding claims, wherein the vehicle seat (1) has a seat frame side part (6) that is connected to a first seat rail (14).

## Revendications

1. Dispositif de réglage longitudinal (10) pour un siège de véhicule (1), notamment un siège de véhicule automobile, présentant au moins une paire de rails (12), laquelle est formée d'un premier rail de siège (14), notamment à relier à une partie latérale de cadre de siège (6), et d'un deuxième rail de siège (16), notamment à relier à une structure de véhicule, les rails de siège (14, 16) de la paire de rails (12) pouvant être déplacés dans la direction longitudinale (x) l'un par rapport à l'autre et étant imbriqués l'un dans l'autre de façon alternée en formant un canal intérieur (18), une armature (20) fixée au deuxième rail de siège (16) étant disposée dans le canal intérieur (18), un profil de renforcement (22) fixé au premier rail de siège (14) étant disposé dans le canal intérieur (18), le profil de renforcement (22) et l'armature (20) étant espacés l'un de l'autre dans un cas normal et s'accrochant l'un à l'autre, en particulier venant en prise l'un dans l'autre, en réaction à une application de force prédéfinie, par exemple en cas de collision,
**caractérisé en ce que**
le profil de renforcement (22) présente une portion de liaison (24), laquelle est guidée ver l'arrière hors du canal intérieur (18) et peut être reliée à une extrémité arrière d'une partie latérale de cadre de siège (6), la portion de connexion (24) étant incurvée vers le haut autour d'un axe de flexion s'étendant dans la direction transversale (y).

2. Dispositif de réglage longitudinal (10) selon la revendication 1, la portion de liaison (24) pouvant être reliée à une surface (8), orientée vers l'arrière, d'une partie latérale de cadre de siège (6).

3. Dispositif de réglage longitudinal (10) selon l'une des revendications 1 ou 2, la portion de liaison (24) étant configurée d'un seul tenant avec le profil de renforcement(22).

4. Dispositif de réglage longitudinal (10) selon l'une des revendications 1 à 3, la portion de liaison (24) étant incurvée vers le haut d'environ 90° autour de l'axe de flexion s'étendant dans la direction transversale (y).

5. Dispositif de réglage longitudinal (10) selon l'une des revendications 1 à 4, la portion de liaison (24) faisant saillie approximativement perpendiculairement à partir d'un corps de base du profil de renforcement (22).

6. Dispositif de réglage longitudinal (10) selon la revendication 5, la portion de liaison (24) faisant saillie approximativement perpendiculairement à partir d'une extrémité arrière du corps de base du profil de renforcement (22).

7. Dispositif de réglage longitudinal (10) selon l'une des revendications 1 à 6, l'armature (20) étant reliée à un adaptateur de rail de siège (50) spécifique au siège, ou à un adaptateur de fond de rail pour l'adaptation à un profil de liaison côté structure.

8. Dispositif de réglage longitudinal (10) selon l'une des revendications 1 à 7, le profil de renforcement (22), dans le cas d'un siège de véhicule (1) prémonté sur une paire de rails (12), pouvant être inséré depuis l'extrémité arrière de la paire de rails (12) dans le canal intérieur (18) entre le premier rail de siège (14) et le deuxième rail de siège (16).

9. Dispositif de réglage longitudinal (10) selon l'une des revendications 1 à 8, le profil de renforcement (22) étant retenu à l'aide d'un élément de fixation (28) au niveau d'une surface (8), orientée vers l'arrière, de la partie latérale de cadre de siège (6).

10. Dispositif de réglage longitudinal (10) selon la revendication 9, l'élément de fixation (28) étant un rivet ou une liaison vissée.

11. Dispositif de réglage longitudinal (10) selon l'une des revendications 1 à 10, la portion de liaison (24) présentant un évidement (32) et la partie latérale de cadre de siège (6) présentant une saillie (34), la saillie (34) de la partie latérale de cadre de siège (6) venant en prise dans l'évidement (32) de la portion de liaison (24) du profil de renforcement (22) dans l'état monté.

12. Dispositif de réglage longitudinal (10) selon l'une des revendications 1 à 10, la portion de liaison (24) présentant une saillie (34) et la partie latérale de cadre de siège (6) présentant un évidement (32), la saillie (34) de la portion de liaison (24) du profil de renforcement (22) venant en prise dans l'évidement (32) de la partie latérale de cadre de siège (6) dans l'état monté.

13. Dispositif de réglage longitudinal (10) selon l'une des revendications 1 à 12, un alésage traversant (30a, 30b) étant respectivement prévu dans la portion de liaison (24) et la surface (8) orientée vers l'arrière pour la liaison à l'aide de l'élément de fixation (28).

14. Dispositif de réglage longitudinal (10) selon la revendication 13, un diamètre de l'alésage traversant (30a) étant légèrement plus grand dans la portion de liaison (24) qu'un diamètre de l'alésage traversant (30b) dans la partie latérale de cadre de siège (6).

15. Siège de véhicule (1) comprenant un dispositif de réglage longitudinal (10) selon l'une quelconque des revendications précédentes, le siège de véhicule (1) présentant une partie latérale de cadre de siège (6), laquelle est reliée à un premier rail de siège (14).
